# EUROPÄISCHE PATENTSCHRIFT

(11) **EP 3 319 414 B1**
(45) Veröffentlichungstag und Bekanntmachung des Hinweises auf die Patenterteilung: **28.08.2019**
(21) Anmeldenummer: 16745052.7
(22) Anmeldetag: 06.07.2016
(51) Int. Cl.: A01G 9/04

(54) **PALETTE FÜR PFLANZTOPFE**
TRAY FOR PLANTPOTS
PLATEAU POUR POTS DE FLEURS

(30) Priorität: 10.07.2015 DE 202015103641 U
(43) Veröffentlichungstag der Anmeldung: 16.05.2018
(73) Patentinhaber: Pöppelmann Holding GmbH & Co. KG., 49378 Lohne (DE)
(72) Erfinder: ORSCHULIK, Günther, 49451 Holdorf (DE)
(74) Vertreter: Weeg, Thomas
(86) Internationale Anmeldenummer: PCT/EP2016/001160
(87) Internationale Veröffentlichungsnummer: WO 2017/008893

(56) Entgegenhaltungen:
- NL-A- 7 315 798
- US-A- 5 022 183
- US-A1- 2004 211 118
- US-A1- 2012 066 970
- US-A1- 2014 311 027

## Beschreibung

Die vorliegende Erfindung betrifft ein Pflanzentray aus Kunststoff mit einer Mehrzahl von zur Aufnahme zumindest eines Pflanztopfs ausgebildeten Nutzen, wobei zumindest einer der Nutzen einen mit wenigstens einem Bodenloch versehenen Boden aufweist, der randseitig in eine Wand des Pflanzentrays übergeht, unterseitig eine Aufstandsfläche für das Pflanzentray und oberseitig wenigstens ein Auflager für den Pflanztopf ausbildet, wobei der Boden durch wenigstens einen unterseitigen, als Be- und/oder Entwässerungskanal ausgebildeten Kanal bezüglich einer unteren Aufstellebene unterschiedlich hohe Bodenbereiche ausbildet und der die Aufstandsfläche ausbildende, untere Bodenbereich durch das Bodenloch be- und/oder entwässerbar ist.

Ein Gegenstand nach dem Oberbegriff des Anspruchs 1 ist aus dem Markt sowie beispielsweise aus GB 02084535-0001 , US5022183, US20140311027 und NL7315798 bekannt.

Nachteilig ist bei diesem wie auch anderen aus dem Stand der Technik bekannten Pflanzentrays, dass in die Nutzen eingesetzte Pflanztöpfe auf der Oberseite der Kanäle aufliegen und getragen werden. Dies führt zu einer Beabstandung des unteren Pflanztopfbereichs von dem unteren Bodenbereich des Nutzen, so dass eine Mattenbewässerung, die auf einem kapillaren Wassertransport basiert, nicht erfolgreich durchgeführt werden kann. Weiche und hoch aufbauende Matten haben wiederum das Problem, dass eine Ebbe-/Flutbewässerung nicht prozesssicher funktionieren kann, da die für schwallartiges Eindringen bzw. für ein schnelles Abfließen von Wasser, dass auch bei einer Überkopfbewässerung notwendig werden kann, benötigten Kanäle nicht ausreichend frei sind. Außerdem ist eine unterseitige Belüftung erschwert.

Es ist daher Aufgabe der vorliegenden Erfindung, ein Pflanzentray für eine Verwendung mit einer Überkopf-, einer Ebbe/Flut- und einer Mattenbewässerung zu optimieren.

Die Aufgabe wird gelöst durch den Gegenstand gemäß Anspruch 1 sowie durch eine Anordnung nach Anspruch 11.

Weitere Vorteile und Einzelheiten der Erfindung sind der nachfolgenden Beschreibung sowie den auf die unabhängigen Ansprüche rückbezogenen Ansprüchen zu entnehmen.

Erfindungsgemäß ist vorgesehen, dass der untere Bodenbereich zumindest einen Teil des Auflagers ausbildet. Die Wandstärke des Pflanzentrays kann im unteren Teil reduziert werden, da die oberen Bodenbereiche weniger oder gar keine Kräfte etwaiger über ihnen befindlicher Pflanztöpfe aufnehmen müssen und zumindest der größere Teil der Gewichtskraft des Pflanztopfs direkt in den unteren Bodenbereich, der unterseitig die Aufstandsfläche für das Pflanzentray zumindest mit ausbildet, eingeleitet wird. Dieser Teil der Gewichtskraft wird direkt in den Untergrund eingeleitet. Hierzu bedarf es einer Änderung in der Auslegung und Konstruktion herkömmlicher Pflanzentrays, da der oder die Kanäle und etwaige gegenüber den unteren Bodenbereichen höhere Bodenbereiche des Pflanzentrays nicht mehr die Last oder Hauptlast der Pflanztöpfe tragen. Die Pflanztöpfe, die zur Befüllung des Trays verwendet werden, stehen sicher auf den unteren Bodenbereichen der Nutzen. Vom Pflanztopf auf höhere Bereiche des Pflanzentrays ausgeübte Kräfte führen bei Querbeschleunigungen des Pflanzentrays zu weniger Verwindungen des Nutzenbodens.

Beispielsweise handelt es sich bei dem Untergrund um eine Matte, so dass eine für kapillare Bewässerung geeignete Verbindung zum untersten Bodenbereich für Pflanztöpfe, die ebenfalls in ihren untersten Bodenbereichen Öffnungen und entsprechend Substrat aufweisen, vorhanden ist. Es hat sich insbesondere gezeigt, dass eine Belüftung etwaiger Pflanztöpfe über Kanäle des Trays, die für eine schnelle Be- und Entwässerung ausreichend groß sind, dann auch in ausreichendem Maße gewährleistet werden kann.

Ein auf dem unteren Bodenbereich gelagerter Pflanztopf, der in dem auf dem Bodenbereich aufliegenden Pflanztopfboden ebenfalls Ausnehmungen aufweist, kann durch das Bodenloch des Trays kapillar und mithin über Matten bewässert werden, während er durch die Kanäle schneller be- und entwässerbar ist.

Der Be- und Entwässerungskanal für Ebbe-/Flut- und/oder Überkopfbewässerung ist vorzugsweise mit einer lichten Höhe über der Aufstandsfläche von mehr als 2 mm ausgebildet. Mithin bildet der Kanal einen Hohllagebereich in etwa gleicher Höhe oberhalb der Aufstellebene aus. Aufstellebene und Aufstandsfläche sind in einer Position des Pflanzentrays auf einem Untergrund nahezu identisch, da sie dicht aneinander anliegen. Die Aufstellebene ist diejenige Ebene, auf die die Aufstandsfläche aufliegt.

Der untere Bodenbereich kann durch ein oder mehrere gegebenenfalls über Hohllagebereiche in Form von Kanälen, Sicken oder Versteifungsstegen voneinander getrennte Bereiche gebildet werden. Entsprechend kann das Auflager auch mehrteilig ausgebildet sein. Insbesondere wird das Auflager komplett durch den unteren Bodenbereich ausgebildet.

Eine besonders stabile Ausbildung ist dann gegeben, wenn in einer senkrechten Draufsicht zumindest 50% der Fläche des Bodens das Auflager ausbilden. Je mehr Fläche für das Auflager vom unteren Bodenbereich gebildet wird, desto niedriger können der Schwerpunkt eines befüllten und die Wände des zu transportierenden Pflanzentrays ausgebildet werden und desto niedriger kann das Tray an sich ausgebildet werden, was zu verringertem Materialaufwand führt.

Zur optimalen Ausnutzung des zur Verfügung stehenden Raumes ist der Auflagerteil, d.h. der Teil des Auflagers, der vom unteren Bodenbereich ausgebildet wird, randseitig von der Wand des Pflanzentrays und/oder zumindest eines Kanals begrenzt. Dieser Übergang in den Wandbereich kann auch über versteifte, zusätzlich abgesetzte Bereiche verfügen, allerdings sind die zur Verfügung stehenden Flächen größer, wenn der untere Bodenbereich direkt in eine seitliche Wand bzw. einen beispielsweise durch einen Kanal gebildeten erhöhten Bereich übergeht.

Während es vorteilhaft sein kann, dass der untere Bodenbereich zentral im Nutzenboden angeordnet ist, sind insbesondere die Ausführungsbeispiele in der Regel steifer und stabiler ausgebildet, deren wenigstens einer unterer Bodenbereich sich bis zum Rand des Nutzenbodens erstreckt.

Zur größtmöglichen Ausnutzung des zur Verfügung stehenden Platzes auf den herkömmlicherweise in der Draufsicht mit einer viereckigen Umfangskontur versehenen Pflanzentrays sind Nutzen und/oder Auflagerteil ebenfalls mit einem zumindest im Wesentlichen viereckigen Grundriss versehen. Es versteht sich allerdings, dass die Übergänge unterer Bodenbereich-Wand aus konstruktiven Gründen genauso gerundet ausgebildet sein können wie die Übergänge zwischen den zumindest abschnittsweise gradlinig ausgebildeten Seiten eines unteren Bodenbereichs.

Viereckige Grundflächen, die als Teile des unteren Bodenbereichs das Auflager oder Teile hiervon ausbilden, sind durch Übergänge auf allen vier Seiten versteift, beispielsweise durch Übergänge in auf zwei Seiten vorhandene Wände des Nutzens und in auf zwei weiteren Seiten vorhandene Kanäle.

Alternativ oder ergänzend können einzelne oder alle Nutzen des Pflanzentrays eine kreisrunde Grundform aufweisen, was zwar zu einer geringeren Ausnutzung des zur Verfügung stehenden Bauraumes führen kann, allerdings für unten runde Töpfe besseren Halt bietet.

Vorteilhafterweise ist der das Auflagerteil ausbildende untere Bodenbereich an das Bodenloch dergestalt angrenzend ausgebildet, dass ein unmittelbar oberhalb dieses Bodenbereichs befindlicher Teil des Nutzen in den als Be-, Entwässerungs- und/oder Lüftungskanal ausgebildeten Kanal hinein entwässern kann oder über diesen bewässerbar ist.

Das Bodenloch begrenzt somit beispielsweise randseitig das Auflager und muss sich zumindest dergestalt an diesem befinden, dass der untere Bodenbereich zum Bodenloch hin keinen Rand oder einen nur vernachlässigbaren Rand (Höhe < 0,3 mm) aufweist. Insbesondere stellt das Bodenloch eine Ausnehmung in dem unteren Bodenbereich dar und ist gleichzeitig teilweise in der Wand oder in einer Kanalwand angeordnet. Das Bodenloch kann hierbei für eine Mattenbewässerung geeignet sein, wenn es in einer Draufsicht von oben in einer Ebene des unteren Bodenbereiches eine flächige Ausdehnung aufweist. Somit kann durch das untere Bodenloch einerseits eine Mattenbewässerung erfolgen, gleichzeitig auch eine Be-, Entwässerung und/oder Belüftung durch den Kanal.

Gemäß einer weiteren vorteilhaften Ausführung der Erfindung ist der Boden zumindest mit drei, vorzugsweise vier durch Kanäle getrennten Auflagerteilen versehen. Diese insbesondere auch eckig ausgebildeten Auflagerteile bilden ein sicheres Auflager durch Begrenzung in Richtung der jeweiligen Hauptachsen aus (XY-Ebene) und verhindern gleichzeitig ein Verdrehen des im Nutzen angeordneten Pflanztopfs.

Bei Ausführungsbeispielen, bei denen die drei oder vier Auflagerteile gleichzeitig auch umfangsseitig angrenzend an einen Rand des Pflanztopfes ausgebildet sind, kann auch direkt in diese dann vorzugsweise als Hohl- oder Seitenbereiche des Pflanzentrays ausgebildeten Bereiche entwässert oder bewässert oder belüftet werden. Gleichzeitig ist die Bodenfläche, die für das Auflager verfügbar ist, optimal ausgenutzt.

Sofern alle vier Auflagerbereiche durch ein einziges Bodenloch entwässert werden, ist der Querschnitt des Bodenlochs vorzugsweise größer als die Breite der Entwässerungskanäle. So kann das Bodenloch eine bessere Be- und Entwässerung mehrerer Auflagerbereiche vornehmen. Vorzugsweise ist das eine Bodenloch in einem Bereich des Nutzenbodens angeordnet, in dem ansonsten die Spitzen von vier viereckig geformten Auflagern oder drei mit drei Ecken versehenen Auflagern aneinander stoßen würden.

In einer einfachen, erfindungsgemäßen Variante mit lediglich einem von einem einzigen, zusammenhängenden unteren Bodenbereich gebildeten Auflagerteil kann ein unmittelbar oberhalb desselben befindlicher Nutzenbereich durch einen z.B. stichkanalartig ausgebildeten Kanal zum Rand hin entwässert bzw. von dort bewässert werden.

Das Bodenloch kann somit zentral zwischen zumindest zwei Bodenbereichen angeordnet und insbesondere an mehrere randseitig hinausführende Be- und/oder Entwässerungskanäle angrenzen. Diese Kanäle sind in Fluidkommunikation mit dem Bodenloch. Die Stabilität des unteren Bodenbereichs wird hierbei weniger beeinträchtigt als wenn jeder untere Bodenbereich ein einzelnes für Ebbe-/Flutbewässerung bzw. Überkopfbewässerung vorgesehenes Bodenloch aufweist, welches dann insbesondere auch randseitig anzuordnen wäre. Durch die zentrale Anordnung eines Bodenlochs zwischen zwei Bereichen im Nutzenboden ist dieser mit mehr Material und somit stabiler ausgebildet. Mehrere Kanäle, die insbesondere zu unterschiedlichen Rändern des Nutzenbodens hinausführen, dienen somit auch der Be- und Entwässerung aus bzw. in unterschiedliche Richtungen.

Die Kanäle sind insbesondere randseitig, und zwar vorzugsweise geradlinig von dem zentralen Bodenloch aus hinauszuführen. Für das Auflager steht mehr Platz zur Verfügung, außerdem sind Be- und Entwässerung für Überkopf- und Ebbe/Flutbewässerung gut durchführbar, ein Luftaustausch kann über kürzere Distanzen erfolgen. Randseitig führen die Entwässerungskanäle dann hinaus, wenn sie entweder in unterseitige Hohllagebereiche des Pflanzentrays hinein- oder auch zu dessen Rand hinausführen.

Ebenfalls sind Wasserführung und Belüftung verbessert, wenn die Kanäle stern- und insbesondere kreuzförmig vom Bodenloch und in einer Draufsicht vorzugsweise senkrecht zu den Seiten des Pflanzentrays in Richtung des Randes, insbesondere bis zu diesem und somit nach außen führen. Somit sind die Entwässerungskanäle möglichst kurz ausgebildet und die Auflagerflächen können ausreichend groß ausgebildet werden. Es versteht sich, dass sich die Kanäle zum Rand hin aufweiten können, um Ein- bzw. Auslaufbereiche auszubilden. Neben dem Rand des Pflanzentrays können hierbei auch innenliegende Wände des Pflanzentrays, die Hohllagebereiche desselben ausbilden, als Rand angesehen werden. Diese sind in Fluidkommunikation mit einem Außenbereich um das Pflanzentray.

Bei einer kreuzförmigen Ausbildung der Be- und Entwässerungskanäle, die für schwallartiges Be- und Entwässern geeignet sind und somit zumindest 2, vorteilhafterweise sogar mindestens 3 mm hoch sind, ergeben sich vier Auflager und somit eine optimale Platzausnutzung. Die Länge der Kanäle ist minimiert, gleichzeitig kann ein Nutzenboden unterseitig von Seite zu Seite durchströmt werden.

Gemäß einem weiteren erfindungsgemäßen Ausführungsbeispiel ist das Bodenloch für Ebbe-/Flut- und Überkopfbewässerung vorgesehen und mithin führt es, während es einerseits teilweise im unteren Bodenbereich angeordnet ist, gleichzeitig auch in einen Be- und Entwässerungskanal, ist somit also am Rand des unteren Bodenbereichs vorgesehen. Zusätzlich ist zumindest ein weiteres Bodenloch vollständig in dem unteren Bodenbereich vorgesehen, um die Matten-/Kapillarbewässerung zu verbessern. Vorzugsweise ist dieses weitere Bodenloch jeweils in jedem, von anderen Auflagerteilen getrennten Auflagerteil vorhanden und vollständig im jeweiligen Auflagerteil enthalten.

Die eingangs gestellte Aufgabe wird ebenfalls durch eine Anordnung umfassend einen Pflanzentray wie vor- oder nachbeschreiben und wenigstens einen Pflanztopf gelöst, wobei der Pflanztopf in einer im Nutzen gelagerten Position einen auf dem unteren Bodenbereich aufstehenden unteren Pflanztopfbereich mit einem Pflanztopfbodenloch aufweist, welches in einer Draufsicht zumindest teilweise mit einem Bodenloch des Pflanzentrays deckungsgleich ist. Vorzugsweise handelt es sich hierbei um komplett deckungsgleiche Bodenlöcher, so dass bei einer Mattenbewässerung die unteren Bodenbereiche von Pflanztopf und Pflanzentray aneinander anliegen und eine Mattenbewässerung ohne größere Probleme direkt den Pflanztopf bewässern kann.

Ein zentrales Bodenloch für eine schnelle Be- und Entwässerung (Überkopfbewässerung, Ebbe/Flutbewässerung), welches eine Fluidkommunikation zwischen den oberhalb der unteren Bodenbereiche angeordneten Nutzenbereichen und dem oder den Kanälen ermöglicht, weist einen Durchmesser insbesondere zwischen 20 mm und 40 mm auf. Ausschließlich in den unteren Bodenbereichen vorhandene und für die Matten Be- und Entwässerung vorgesehene Bodenlöcher besitzen vorteilhafterweise Durchmesser zwischen 10 mm und 20 mm. Bei einer Dicke des Nutzenbodens im Bereich von 0,25 mm bis 0,35 mm, vorzugsweise 0,28 mm bis 0,3 mm, ergeben sich in Kombination mit dem Pflanztopfboden Höhen von unter 1 mm, die für Kapillar- bzw. Mattenbewässerung und bei Aufstehen des Pflanzentrays auf einer Matte gut überbrückbar sind. Die unteren Bodenbereiche von Pflanzentray und Pflanztopf liegen ohne Distanzierung aufeinander auf.

Vorteilhafterweise sind in einer Draufsicht betrachtet die Konturen der Bodenlöcher von Pflanztopf und Pflanzentray dergestalt ausgebildet, dass die Kontur des Pflanztopf-Bodenloches innerhalb und/oder auf der Kontur des korrespondierenden Pflanzentraybodentopfs liegt. Besonders bevorzugt sind sie wie vorbeschrieben deckungsgleich. Somit ist insbesondere die Bodenkontur des Pflanzentrays kongruierend mit der Bodenkontur des Pflanztopfes auszubilden, so dass eine maximale Ausnutzung der Auflagerfläche, eine stabile Positionierung und eine optimale Belüftung sowie Be- und Entwässerung erfolgen kann.

Weitere Vorteile und Einzelheiten der Erfindung sind der nachfolgenden Beschreibung zu entnehmen.

Es zeigt:
- Fig. 1: eine erfindungsgemäße Anordnung umfassend ein Pflanzentray und einen Pflanztopf,
- Fig. 2: eine Draufsicht auf den Gegenstand nach Fig. 1,
- Fig. 3: einen Teil des Gegenstands nach Fig. 1 in einer Unteransicht,
- Fig. 4: einen Pflanztopf nach Fig. 1.

Einzelne technische Merkmale der nachbeschriebenen Ausführungsbeispiele können auch in Kombination mit vorbeschriebenen Ausführungsbeispielen sowie den Merkmalen der unabhängigen Ansprüche und weiterer abhängiger Ansprüche zu erfindungsgemäßen Gegenständen kombiniert werden, innerhalb der durch die beigefügten Ansprüche angegebenen Grenzen. Sofern sinnvoll, werden funktional gleichwirkende Elemente mit identischen Bezugsziffern versehen.

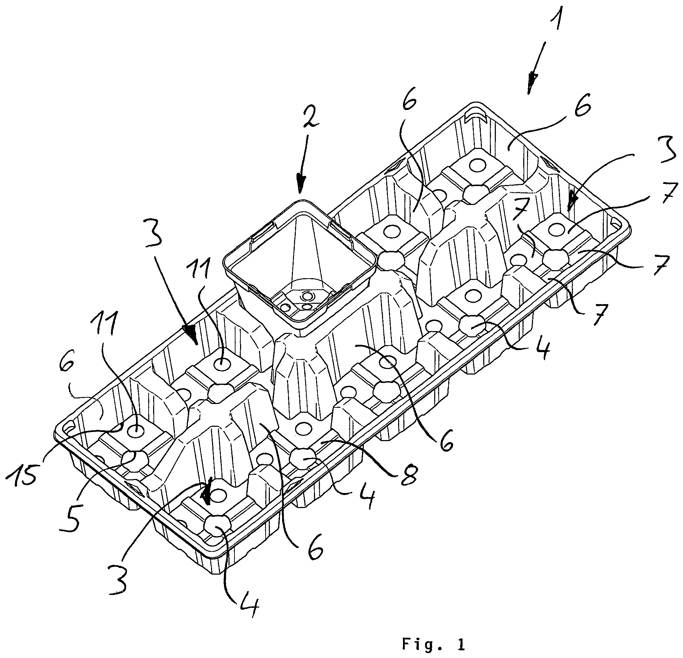

Eine erfindungsgemäße Anordnung gemäß Fig. 1 umfasst ein Pflanzentray 1 sowie einen Pflanztopf 2, der in einem von mehreren Nutzen 3 des Pflanzentrays 1 aufgenommen ist. Vorliegend handelt es sich bei dem Pflanzentray 1 um einen 5 x 2-Pflanzentray, d.h. einem Pflanzentray 1 mit zwei Reihen á fünf Nutzen. Erfindungsgemäß sind jedoch auch andere Nutzenanzahlen z.B. 3 x 5-, 2 x 4- oder 3 x 4-Pflanzentrays, möglich.

Alle Nutzen 3 des insbesondere thermogeformten Pflanzentrays 1 weisen einen mit einem vorzugsweise gestanzten Bodenloch 4 versehenen Boden auf, der randseitig in eine Wand 6 des Pflanzentrays 1 übergeht. Jeder Nutzen 3 weist vier untere Bodenbereiche 7 auf, die unterseitig eine Aufstandsfläche 14 für das Pflanzentray 1 und oberseitig ein Auflager für den jeweiligen Pflanztopf 2, der in den Nutzen 3 eingesetzt werden kann, ausbilden. Das zentrale Bodenloch 4 dient der Be- und Entwässerung eines unmittelbar oberhalb des unteren Bodenbereiches befindlichen Bereiches des Nutzen 3 sowie dessen Belüftung. Etwaiges in diesem Bereich vorhandenes Wasser kann über Kanten 5 in die Hohllagebereiche ausbildenden Kanäle 8 hinein fließen bzw. bei einer Ebbe-/Flutbewässerung über diese Kanten in den jeweiligen Bereich oberhalb der Auflagerteile einströmen.

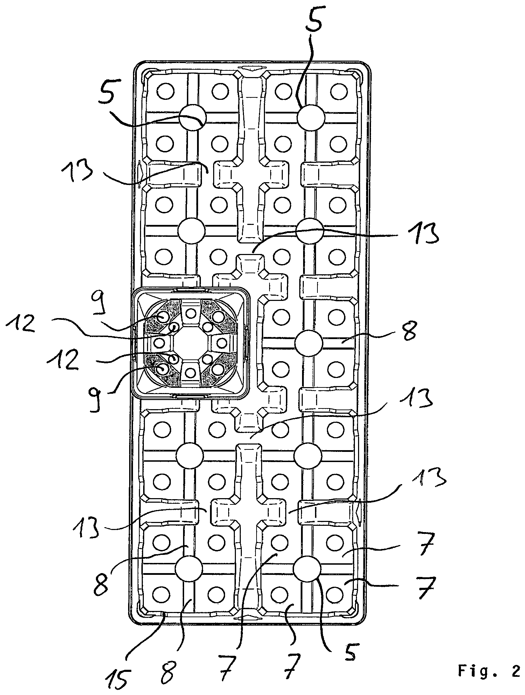

Der Pflanztopf 2 ist mit Bodenlöchern 9 und 12 versehen, welche eine Fluidkommunikation mit dem Bodenloch 4 oder mit einem im jeweiligen Auflagerteil gebildeten Bodenloch 11 ermöglichen. Die Bodenlöcher 11 sind im Nutzen 3 so angeordnet, dass sie mit Bodenlöchern 9 des Pflanztopfes 2 eine kapillare Be- und Entwässerung und somit eine Be- und Entwässerung über Matten gewährleisten. Die Bodenlöcher 12 des Pflanztopfes 2 dienen der Fluidkommunikation mit dem zentralen Bodenloch 4 und sind somit für schnelle Be- und Entwässerung verwendbar (vgl. Fig. 2).

Im Ausführungsbeispiel nach Fig. 2 bilden zumindest 50% der Fläche des Bodens des Nutzens 3 das Auflager aus. Insbesondere wird das Auflager durch die vier unteren Bodenbereiche 7 eines jeweiligen Nutzen 3 ausgebildet. Verbindungsbereiche 13 zwischen einzelnen Nutzen 3 dienen einem Wasserausgleich, um beispielsweise bei ungleichmäßiger Überkopfbewässerung unabhängig von unterseitigen Hohllagebereichen einen gleichmäßigen Wasserstand im Pflanzentray 1 zu ermöglichen.

Die Nutzen 3 weisen eine im Wesentlichen bis auf gerundete Kanten und leichte Versprünge in den Seiten viereckige Grundform auf. Die Kanäle 8, die ausgehend von dem zentralen Bodenloch 4 senkrecht zu den die Ränder des Nutzen 3 ausbildenden Wänden 6 hinführen und einen unterseitigen Hohllagebereich des Nutzenbodens in Fluidkommunikation mit weiteren Hohllagebereichen bzw. Außenbereichen des Pflanzentrays 1 bringen, sind kreuzförmig angeordnet und unterteilen den im Wesentlichen viereckigen Nutzenboden in ebenfalls wiederum im Wesentlichen viereckige Auflagerteile. Die Auflagerteile sind in den Ecken teilweise abgerundet und in den Seiten teilweise mit Durchbrüchen in Form der Verbindungsbereiche 13 sowie mit Versprüngen 15 versehen, besitzen allerdings eine trotz der abgeschrägten Ecken viereckige Grundform. Der zur Verfügung stehende Bereich wird somit für das Auflager optimal ausgenutzt. Etwaige Versprünge 15 in den Wänden 6 des Nutzen 3 sind der Stabilisierung des Pflanzentrays 1 geschuldet.

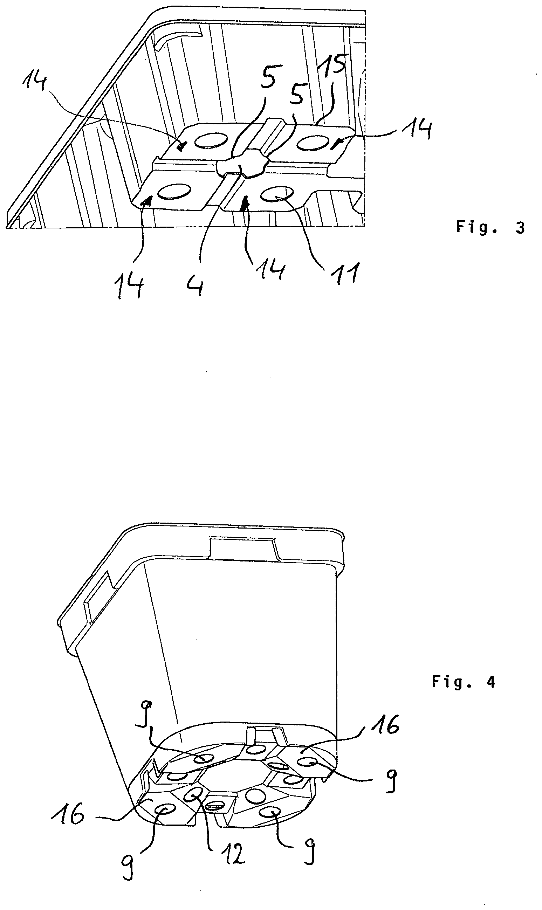

Die von den Kanälen 8 gebildeten Hohllagebereiche sind mindestens 3 mm hoch, was in Fig. 3 besonders gut deutlich ist. Ebenfalls sind eine Aufstandsfläche 14 ausbildende Unterseiten der unteren Bodenbereiche 7 direkt durch das Bodenloch 4 begrenzt, welches in eine Ecke des unteren Bodenbereichs 7 hineingeschnitten ist. Ein oberhalb des unteren Bodenbereichs 7 befindlicher Bereich des Nutzen 3 kann somit direkt in das zentrale Bodenloch 4 hinein und von dort über die Kanäle 8 entwässert bzw. belüftet werden.

Vorzugsweise kongruieren die Bodenlöcher 4 und 11 des Pflanzentrays 1 mit Bodenlöchern 9 und 12 des Pflanztopfes 2. Je nach Ausbildung des Pflanztopfes 2 ist es jedoch ausreichend, wenn zumindest in den unteren Bodenbereichen 7 Bodenlöcher 11 vorhanden sind, die mit Bodenlöchern 9 des Pflanztopfes 2 (vgl. Fig. 4) kongruieren. Um eine Entwässerung des Pflanztopfes 2 optimal zu gestalten, ist dieser mit Bodenlöchern 9 versehen, die in einer Draufsicht (vgl. Fig. 2) innerhalb des Umfangs des jeweiligen korrespondierenden Bodenlochs 11 angeordnet sind. Die Bodenlöcher des Pflanzentrays 1 sind somit größer als diejenigen des Pflanztopfes 2. Gleichzeitig liegen bei Anordnung des Pflanztopfes 2 im Nutzen 3 die unteren Bodenbereiche 16 des Pflanztopfes 2 direkt auf dem unteren Bodenbereich 7 des Nutzen 3 auf.

Während die Nutzen 3 zur Aufnahme von zumindest in ihrem oberen Bereich eckig ausgebildeter Pflanztöpfe 2 ausgebildet sind, kann der Pflanztopfboden unabhängig hiervon auch gerundet ausgebildet sein. Die das Auflager bildenden unteren Bodenbereiche 7 sind durch die optimale Ausnutzung des im Pflanzentray 1 verfügbaren Platzes so groß dimensioniert, dass Pflanztöpfe mit verschiedenen Bodenkonturen eingesetzt werden können.

## Patentansprüche

1. Pflanzentray aus Kunststoff mit einer Mehrzahl von zur Aufnahme zumindest eines Pflanztopfes (2) ausgebildeten Nutzen (3), wobei zumindest einer der Nutzen (3) einen mit wenigstens einem Bodenloch (4,11) versehenen Boden aufweist, der randseitig in eine Wand (6) des Pflanzentrays (1) übergeht, unterseitig eine Aufstandsfläche (14) für das Pflanzentray (1) und oberseitig wenigstens ein Auflager für den Pflanztopf (2) ausbildet, **dadurch gekennzeichnet, dass** der Boden durch wenigstens einen unterseitigen als Be- und/oder Entwässerungskanal ausgebildeten Kanal (8) bezüglich einer unteren Aufstellebene unterschiedlich hohe Bodenbereiche ausbildet und ein unmittelbar oberhalb des die Aufstandsfläche (14) ausbildenden, unteren Bodenbereichs (7) befindlicher Nutzenbereich durch das Bodenloch (4,11) be- und/oder entwässerbar ist, wobei der untere Bodenbereich (7) zumindest einen Teil des Auflagers ausbildet.

2. Pflanzentray nach Anspruch 1, **dadurch gekennzeichnet, dass** betrachtet in einer senkrechten Draufsicht zumindest 50 % der Fläche des Bodens das Auflager ausbilden.

3. Pflanzentray nach Anspruch 1 oder 2, **dadurch gekennzeichnet, dass** der Auflagerteil randseitig von der Wand (6) des Pflanzentrays (1) und/oder zumindest eines Kanals (8) begrenzt ist.

4. Pflanzentray nach einem der vorherigen Ansprüche, **dadurch gekennzeichnet, dass** Nutzen (3) und/oder Auflagerteil einen zumindest im Wesentlichen viereckigen Grundriss aufweisen.

5. Pflanzentray nach einem der vorherigen Ansprüche, **dadurch gekennzeichnet, dass** der das Auflagerteil ausbildende untere Bodenbereich (7) an das Bodenloch (4) dergestalt angrenzt, dass ein unmittelbar oberhalb dieses Bodenbereiches (7) befindlicher Teil des Nutzen in den Kanal (8) hinein entwässern kann oder über diesen bewässerbar ist.

6. Pflanzentray nach einem der vorherigen Ansprüche mit einer Mehrzahl von Auflagerteilen, **dadurch gekennzeichnet, dass** der Boden zumindest drei, vorzugsweise vier durch Kanäle (8) getrennte Auflagerteile aufweist.

7. Pflanzentray nach einem der vorherigen Ansprüche, **dadurch gekennzeichnet, dass** das Bodenloch (4) zentral zwischen zumindest zwei Bodenbereichen (7) angeordnet ist und insbesondere an mehrere randseitig hinausführende Kanäle (8) be- und/oder angrenzt.

8. Pflanzentray nach Anspruch 6, **dadurch gekennzeichnet, dass** die Kanäle (8) geradlinig von dem zentralen Bodenloch (4) randseitig hinausführen.

9. Pflanzentray nach einem der vorherigen Ansprüche 6 oder 7, **dadurch gekennzeichnet, dass** die Kanäle (8) stern- und insbesondere kreuzförmig vom Bodenloch (4) und insbesondere in einer Draufsicht senkrecht zu den Seiten des Pflanzentrays in Richtung des Randes und insbesondere nach außen führen.

10. Pflanzentray nach einem der vorherigen Ansprüche mit mehreren Bodenlöchern (4,11), **dadurch gekennzeichnet, dass** das Bodenloch (4) für Ebbe-/Flut- und Überkopfbewässerung vorgesehen ist und zumindest ein weiteres der Bodenlöcher (11) vollständig in dem unteren Bodenbereich (7) angeordnet ist.

11. Anordnung umfassend ein Pflanzentray nach einem der vorherigen Ansprüche und wenigstens einen Pflanztopf (2), **dadurch gekennzeichnet, dass** der Pflanztopf (2) in einer im Nutzen (3) gelagerten Position einen auf dem unteren Bodenbereich (7) aufstehenden unteren Pflanztopfbereich mit einem Pflanztopfbodenloch (9) aufweist, welches in einer Draufsicht zumindest teilweise mit einem Bodenloch (11) des Pflanzentrays (1) deckungsgleich ist.

12. Anordnung nach Anspruch 11, **dadurch gekennzeichnet, dass** die unteren Bodenbereiche (7,16) von Pflanzentray (1) und Pflanztopf (2) ohne Distanzierung aufeinander aufliegen.

13. Anordnung nach Anspruch 11 oder 12, **dadurch gekennzeichnet, dass** in einer Draufsicht betrachtet das oder die Bodenlöcher (9,11) des Pflanztopfes und Pflanzentray gleich groß sind.

14. Anordnung nach einem der Ansprüche 11 bis 13, **dadurch gekennzeichnet, dass** die Bodenkontur des Pflanzentrays (1) mit der Bodenkontur des Pflanztopfs (2) kongruiert.

## Claims

1. Plant tray made of a plastics material, comprising a plurality of compartments (3) for receiving at least one plant pot (2), at least one of the compartments (3) having a base which is provided with at least one base hole (4, 11) and of which the edge transitions into a wall (6) of the plant tray (1), the lower face forms a contact surface (14) for the planting tray (1) and the top forms at least one support for the plant pot (2), **characterised in that** the base forms base regions of various heights with respect to a lower installation plane by means of at least one channel (8) on the lower face that is designed as an irrigation and/or drainage channel, and a compartment region located directly above the lower base region (7) which forms the contact surface (14) can be irrigated and/or drained by means of the base hole (4, 11), the lower base region (7) forming at least part of the support.

2. Plant tray according to claim 1, **characterised in that**, viewed in a perpendicular plan view, at least 50% of the surface of the base forms the support.

3. Plant tray according to either claim 1 or claim 2, **characterised in that** the edge of the support part is delimited by the wall (6) of the plant tray (1) and/or of at least one channel (8).

4. Plant tray according to any of the preceding claims, **characterised in that** the compartments (3) and/or support part have an at least substantially square plan.

5. Plant tray according to any of the preceding claims, **characterised in that** the lower base region (7) which forms the support part adjoins the base hole (4) in such a way that a part of the compartment located directly above this base region (7) can drain into the channel (8) or can be irrigated through it.

6. Plant tray according to any of the preceding claims, comprising a plurality of support parts, **characterised in that** the base has at least three, preferably four support parts which are separated by channels (8).

7. Plant tray according to any of the preceding claims, **characterised in that** the base hole (4) is arranged centrally between at least two base regions (7) and in particular borders on and/or adjoins a plurality of channels (8) which lead out to the edge.

8. Plant tray according to claim 6, **characterised in that** the channels (8) lead in a straight line from the central base hole (4) out to the edge.

9. Plant tray according to either of the preceding claims, claim 6 or claim 7, **characterised in that** the channels (8) lead in the shape of a star and in particular in the shape of a cross from the base hole (4) and, in particular in a plan view, lead perpendicularly to the sides of the plant tray in the direction of the edge and in particular lead outwards.

10. Plant tray according to any of the preceding claims, comprising a plurality of base holes (4, 11), **characterised in that** the base hole (4) is provided for the purpose of ebb-/flood- and overhead irrigation and at least one further hole of the base holes (11) is arranged entirely in the lower base region (7).

11. Assembly comprising a plant tray according to any of the preceding claims and at least one plant pot (2), **characterised in that**, in a stored position in a compartment (3), the plant pot (2) has a lower plant pot region which is standing on the lower base region (7) and has a plant pot base hole (9) which, in a plan view, is at least partially congruent with a base hole (11) of the plant tray (1).

12. Assembly according to claim 11, **characterised in that** the lower base regions (7, 16) of the plant tray (1) and the plant pot (2) rest immediately on one another.

13. Assembly according to either claim 11 or claim 12, **characterised in that**, viewed in a plan view, the base hole(s) (9, 11) in the plant pot and plant tray are the same size.

14. Assembly according to any of claims 11 to 13, **characterised in that** the base contour of the plant tray (1) is congruent with the base contour of the plant pot (2).

## Revendications

1. Plateau de semis en plastique avec une pluralité d'alvéoles (3) configurées pour recevoir au moins un godet de plantation (2), au moins l'une des alvéoles (3) présentant un fond muni d'au moins un trou de fond (4, 11) qui se transforme sur les bords en une paroi (6) du plateau de semis en configurant dans sa partie inférieure une surface de pose (14) pour le plateau de semis (1) et dans sa partie supérieure au moins un appui pour le godet de plantation (2), **caractérisé en ce que** le fond configure par au moins un canal (8) configuré dans sa partie inférieure sous forme de canal d'irrigation et/ou de drainage des zones de fond de différents niveaux par rapport à un plan de pose inférieur, et **en ce qu'**une zone d'alvéole située juste au-dessus de la zone de fond inférieure (7) configurant la surface de pose (14) peut être irriguée et/ou drainée à travers le trou de fond (4, 11), ladite zone de fond inférieure (7) configurant au moins une partie de l'appui.

2. Plateau de semis selon la revendication 1, **caractérisé en ce qu'**en vue de dessus verticale, au moins 50 % de la surface du fond configurent l'appui.

3. Plateau de semis selon la revendication 1 ou 2, **caractérisé en ce que** la pièce d'appui est délimitée sur les bords par la paroi (6) du plateau de semis (1) et/ou au moins d'un canal (8).

4. Plateau de semis selon l'une quelconque des revendications précédentes, **caractérisé en ce que** les alvéoles (3) et/ou la pièce d'appui présentent un tracé au moins substantiellement quadrangulaire.

5. Plateau de semis selon l'une quelconque des revendications précédentes, **caractérisé en ce que** la zone de fond inférieure (7) configurant la pièce d'appui est adjacente au trou de fond (4) de telle sorte qu'une partie de l'alvéole située juste au-dessus de cette zone de fond (7) peut être drainée dans le canal (8) ou peut être irriguée à travers celui-ci.

6. Plateau de semis selon l'une quelconque des revendications précédentes, avec une pluralité de pièces d'appui, **caractérisé en ce que** le fond présente au moins trois, de préférence quatre pièces d'appui séparées par des canaux (8).

7. Plateau de semis selon l'une quelconque des revendications précédentes, **caractérisé en ce que** le trou de fond (4) est disposé au centre entre au moins deux zones de fond (7) et est en particulier adjacent à plusieurs canaux (8) débouchant à l'extérieur sur les bords.

8. Plateau de semis selon la revendication 6, **caractérisé en ce que** les canaux (8) débouchent en ligne droite du trou de fond central (4) à l'extérieur sur les bords.

9. Plateau de semis selon l'une quelconque des revendications précédentes 6 ou 7, **caractérisé en ce que** les canaux débouchent en forme d'étoile, et en particulier en forme de croix, du trou de fond (4), et en particulier en vue de dessus perpendiculairement aux côtés du plateau de semis en direction du bord et en particulier à l'extérieur.

10. Plateau de semis selon l'une quelconque des revendications précédentes, avec plusieurs trous de fond (4, 11), **caractérisé en ce que** le trou de fond (4) est prévu pour une irrigation par flux et reflux et par le haut, et au moins un autre des trous de fond (11) est disposé entièrement dans la zone de fond inférieure (7).

11. Ensemble comprenant un plateau de semis selon l'une quelconque des revendications précédentes et au moins un godet de plantation (2), **caractérisé en ce que** le godet de plantation (2) présente dans une position logée dans l'alvéole (3) une zone de godet de plantation inférieure posée sur la zone de fond inférieure (7) avec un trou de fond de godet de plantation (9) qui, en vue de dessus, coïncide au moins en partie avec un trou de fond (11) du plateau de semis (1) .

12. Ensemble selon la revendication 11, **caractérisé en ce que** les zones de fond inférieures (7, 16) du plateau de semis (1) et du godet de plantation (2) s'appuient les unes sur les autres sans espacement.

13. Ensemble selon la revendication 11 ou 12, **caractérisé en ce qu'**en vue de dessus, le(s) trou(s) de fond (9, 11) du godet de plantation et du plateau de semis présente(nt) la même dimension.

14. Ensemble selon l'une quelconque des revendications 11 à 13, **caractérisé en ce que** le contour du fond du plateau de semis (1) correspond au contour de fond du godet de plantation (2).
